# EUROPÄISCHE PATENTSCHRIFT

(11) **EP 1 343 847 B1**
(45) Veröffentlichungstag und Bekanntmachung des Hinweises auf die Patenterteilung: **18.05.2005**
(21) Anmeldenummer: 01270576.0
(22) Anmeldetag: 11.12.2001
(51) Int. Cl.: C09B 29/50, C09B 63/00

(54) **TRANSPARENTE GRÜNSTICHIG GELBE PYRAZOLONAZOPIGMENTE**
TRANSPARENT GREENISH YELLOW PYRAZOLONE PIGMENTS
PIGMENTS PYRAZOLONE JAUNES VERDATRES TRANSPARENTS

(30) Priorität: 13.12.2000 DE 10062130
(43) Veröffentlichungstag der Anmeldung: 17.09.2003
(73) Patentinhaber: BASF AKTIENGESELLSCHAFT, 67056 Ludwigshafen (DE)
(72) Erfinder: BLASCHKA, Peter, 67069 Ludwigshafen (DE); SMEYTS, Günter, 67149 Meckenheim (DE); GÜNTHERT, Paul, 67105 Schifferstadt (DE)
(86) Internationale Anmeldenummer: PCT/EP2001/014510
(87) Internationale Veröffentlichungsnummer: WO 2002/048266

(56) Entgegenhaltungen:
- EP-A- 0 073 972
- EP-A- 0 126 405
- EP-A- 0 263 074
- EP-A- 0 397 190
- EP-A- 0 553 965
- WO-A-96/22333
- DE-A- 2 616 981

## Beschreibung

Die vorliegende Erfindung betrifft neue Pyrazolonazopigmente der allgemeinen Formel I 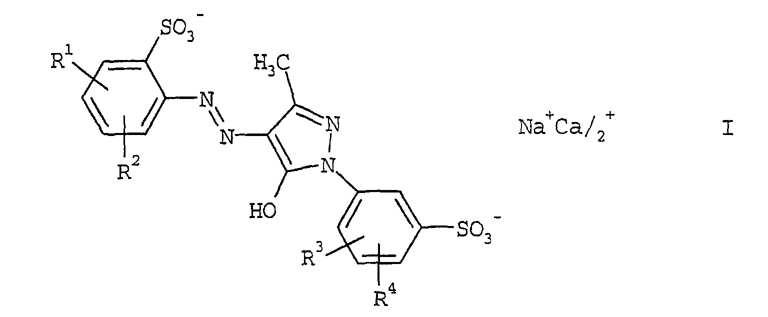 in der die Reste R¹, R², R³ und R⁴ unabhängig voneinander Wasserstoff, Chlor, Methyl oder Ethyl bedeuten, wobei mindestens einer der Reste R¹ bis R⁴ von Wasserstoff verschieden ist,
gekennzeichnet durch einen CIELAB-Farbwinkel von 80 bis 85°, ein Chroma von 58 bis 62 und eine Helligkeit ≥ 87 (Meßwinkel 45°, Normlichtart D65) und die in Form dünner nadelförmiger Kristalle mit einer Nadellänge von 0,8 bis 2,5 µm und einer Nadeldicke von 0,1 bis 0,2 µm vorliegen.

Weiterhin betrifft die Erfindung die Herstellung dieser Pigmente und ihre Verwendung zur Einfärbung von hochmolekularen organischen Materialien sowie hochmolekulare organische Materialien, die mit diesen Pigmenten eingefärbt sind.

Pyrazolonazopigmente werden bekanntermaßen als Gelbpigmente zur Einfärbung von Kunststoffen eingesetzt. Aus der EP-A-263 074 sind Mischkristalle aus verlackten Azofarbstoffen der Pyrazolonreihe bekannt, die zwei verschiedene Verlackungskationen enthalten. Hier werden zwar auch Ca/Na-Mischkristalle beschrieben, diese Pigmente weisen jedoch einen orange Farbton auf und vermögen hinsichtlich ihrer Farbstärke und der Transparenz ihrer Ausfärbungen nicht zu überzeugen.

Der Erfindung lag die Aufgabe zugrunde, Pyrazolonazopigmente für den grünstichig gelben Farbtonbereich bereitzustellen, die sich insgesamt durch vorteilhafte Anwendungseigenschaften, insbesondere auch ihre Farbstärke und die Transparenz ihrer Einfärbungen, auszeichnen.

Demgemäß wurden die eingangs definierten Pyrazolonazopigmente I gefunden.

Weiterhin wurde ein Verfahren zur Herstellung dieser Pyrazolonazopigmente I gefunden, welches dadurch gekennzeichnet ist, daß man eine 2-Amino-benzolsulfonsäure der allgemeinen Formel II 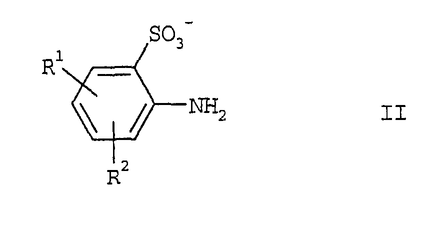 in wäßrigem Medium mit Natriumnitrit diazotiert, die erhaltene Diazokomponente in wäßrigem Medium mit einem 1-(3'-Sulfophenyl)-3-methyl-5-pyrazolon der allgemeinen Formel III 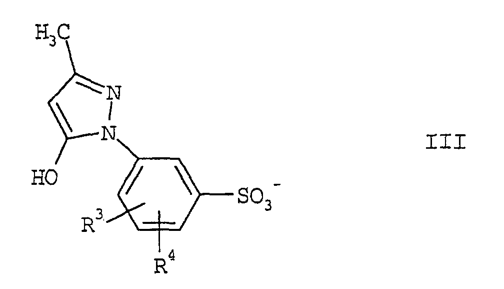 kuppelt und das Kupplungsprodukt anschließend in Gegenwart eines anionischen oberflächenaktiven Mittels mit einer wäßrigen Lösung eines Calciumsalzes zum Natrium/Calcium-Mischsalz umsetzt und dieses dann auf übliche Weise isoliert.

Außerdem wurde die Verwendung der Pyrazolonazopigmente I zum Einfärben von hochmolekularen organischen Materialien gefunden.

In der Formel I bedeuten die Reste R¹ bis R⁴ unabhängig voneinander Wasserstoff, Chlor, Methyl oder Ethyl, wobei mindestens einer der Reste R¹ bis R⁴ von Wasserstoff verschieden ist. Bevorzugt sind R¹ und R² von Wasserstoff verschieden, und besonders bevorzugt stehen R¹ und R² für Chlor und R³ und R⁴ für Wasserstoff.

Die erfindungsgemäßen Pyrazolonazopigmente I weisen einen grünstichig gelben Farbton (CIELAB-Farbwinkel von 80 bis 85°) mit hoher Farbtonreinheit (Chroma 58 bis 62) auf. Sie haben eine hohe Farbstärke und zeichnen sich durch die Transparenz ihrer Einfärbungen in hochmolekularen organischen Materialien aus. Sie liegen in Form dünner nadelförmiger Kristalle (Länge der Nadeln 0,8 bis 2,5 µm, Dicke der Nadeln 0,1 bis 0,2 µm) vor, die problemlos in die Anwendungsmedien eingearbeitet werden können.

Die Herstellung der Pyrazolonazopigmente I kann vorteilhaft nach dem erfindungsgemäßen Verfahren erfolgen, das in Gegenwart von Wasser als Reaktionsmedium vorzugsweise als Eintopfreaktion ohne Isolierung der Zwischenstufen durchgeführt wird.

Der erste Schritt des erfindungsgemäßen Verfahrens besteht in der Diazotierung der 2-Aminobenzolsulfonsäure II mit Natriumnitrit.

Üblicherweise werden hierbei 1 bis 1,1 mol Natriumnitrit je mol 2-Aminobenzolsulfonsäure II eingesetzt.

Die Diazotierung wird üblicherweise bei einem pH-Wert im Bereich von 0,5 bis 0,8, der durch Zugabe einer wäßrigen Säure, insbesondere einer Mineralsäure wie Salzsäure, eingestellt wird, und einer Temperatur von 0 bis 5°C vorgenommen.

Im zweiten Schritt des erfindungsgemäßen Verfahrens erfolgt die Kupplung der erhaltenen Diazokomponente mit dem 1-(3'-Sulfophenyl)-3-methyl-5-pyrazolon III (Kupplungskomponente) in wäßrigem Medium.

Hier wird üblicherweise in Gegenwart eines Puffers, z.B. Natriumacetat, gearbeitet, mit dem ein pH-Wert im Bereich von 4,8 bis 5,1 eingestellt wird.

Die Reaktionstemperatur liegt in der Regel bei 15 bis 20°C.

Das Molverhältnis von Diazokomponente zu Kupplungskomponente III liegt im allgemeinen bei 0,9 : 1 bis 1 : 1.

Der dritte Schritt des erfindungsgemäßen Verfahrens, die Verlakkung zum Natrium/Calcium-Mischsalz, wird direkt in dem beim Kupplungsschritt anfallenden Reaktionsgemisch in Gegenwart eines anionischen oberflächenaktiven Mittels durchgeführt.

Als oberflächenaktives Mittel eignen sich neben Carboxylaten, Sulfaten, Phosphonaten und Phosphaten vor allem Sulfonate, insbesondere die Alkansulfonate, d.h. die Salze der Alkansulfonsäuren.

Darunter versteht man die Sulfochlorierungs- oder Sulfoxidationsprodukte von geradkettigen Paraffinen, d.h. Gemischen homologer Alkane mit 12 bis 18 Kohlenstoffatomen.

Üblicherweise werden 100 bis 180 g, bevorzugt 140 bis 160 g, oberflächenaktives Mittel je mol Kupplungskomponente III eingesetzt.

Die Verlackung nimmt man vorzugsweise bei 75 bis 85°C, insbesondere bei etwa 80°C, vor.

Als Verlackungsmittel eignen sich im Prinzip alle wasserlöslichen Calciumsalze. Beispielhaft seien Calciumchlorid und Calciumacetat genannt, wobei Calciumchlorid bevorzugt ist.

Vorzugsweise unterzieht man das Verlackungsprodukt dann noch zur endgültigen Formierung der Teilchen einer thermischen Behandlung bei 90 bis 95°C.

Verfahrenstechnisch geht man beim erfindungsgemäßen Herstellungsverfahren zweckmäßigerweise wie folgt vor:

Im Diazotierungsschritt löst man die 2-Aminobenzolsulfonsäure II in alkalischem wäßrigem Medium, stellt dann durch Zugabe einer Säure einen stark sauren pH-Wert ein, kühlt durch Zugabe von Eis auf etwa 0 bis 5°C und gibt dann eine Natriumnitritlösung zu. Nach einer Nachrührzeit von etwa 1 bis 2 h bei dieser Temperatur zerstört man den eventuell vorhandenen Nitritüberschuß mit Amidosulfonsäure.

Im Kupplungsschritt stellt man eine wäßrige Lösung der Kupplungskomponente 1-(3'-Sulfophenyl)-3-methyl-5-pyrazolon III unter Zugabe eines Puffers her, die man dann durch Zugabe eines Eis/Wasser-Gemisches auf etwa 10 bis 15°C kühlt. Anschließend dosiert man unter schnellem Rühren das bei der Diazotierung erhaltene Reaktionsgemisch zu und hält die Temperatur des Gemischs bei 15 bis 20°C.

Nach beendeter Kupplungsreaktion gibt man das anionische oberflächenaktive Mittel zu, erhitzt die Mischung in etwa 0,5 bis 1,5 h auf 75 bis 85°C und gibt dann unter schnellem Rühren in etwa 10 bis 30 min das Verlackungsmittel zu.

Zur Formierung der Pigmentteilchen erhitzt man das Reaktionsgemisch dann in etwa 10 bis 30 min auf 90 bis 95°C und rührt etwa 1 bis 3 h bei dieser Temperatur nach.

Das Natrium/Calcium-Mischsalz kann auf übliche Weise nach Abkühlen auf etwa 60 bis 65°C durch Zugabe eines Eis/Wasser-Gemisches, Abfiltrieren, Waschen mit warmem Wasser und Trocknen isoliert werden.

Die erfindungsgemäßen Pyrazolonazopigmente I eignen sich hervorragend zur Einfärbung von hochmolekularen organischen Materialien, z.B. Celluloseethern und -estern wie Ethylcellulose, Nitrocellulose, Celluloseacetat und Cellulosebutyrat, natürlichen Harzen und Kunstharzen wie Polymerisationsharzen und Kondensationsharzen wie Aminoplasten, insbesondere Harnstoff- und Melamin-Formaldehydharzen, Alkydharzen, Phenoplasten, Polycarbonaten, Polyolefinen, Polystyrol, Polyvinylchlorid, Polyamiden, Polyurethanen, Polyestern, Acrylnitril/Butadien/Styrol-Kautschuken, Polyphenylenoxiden, Gummi, Casein, Silikon und Silikonharzen.

Die Pyrazolonazopigmente I zeichnen sich dabei durch den grünstichig gelben Farbton, die Farbtonreinheit und ihre Farbstärke sowie die Transparenz der Einfärbung aus, die deutlich über den mit den Mischkristallen aus der EP-A-263 074 erzielten Werten liegen.

### Beispiel

### Herstellung des erfindungsgemäßen Pyrazolonazopigments Ia (R¹ = R² = Cl; R³ = R⁴ = H)

Zu einer Mischung von 200 ml Wasser und 6 ml 50 gew.-%iger Natronlauge wurden 24,2 g 2-Amino-4,5-dichlorbenzolsulfonsäure (ber. 100%) zugegeben. Nach 15minütigem Nachrühren wurde durch Zugabe von 61 ml 18,6 gew.-%iger Salzsäure ein pH-Wert < 1 eingestellt. Nach Abkühlen der Lösung mit 140 g Eis auf etwa 0°C wurde eine Lösung von 7,1 g Natriumnitrit in 25 ml Wasser zudosiert. Nach einstündigem Nachrühren bei 2-5°C wurde der Nitritüberschuß mit Amidosulfonsäure zerstört.

Separat wurden 26 g 1-(3'-Sulfophenyl)-3-methyl-5-pyrazolon in 290 ml Wasser gegeben und durch Zugabe von 30,5 g Natriumacetat gelöst. Durch Zugabe eines Eis/Wasser-Gemisches wurden eine Temperatur von 15°C und ein Volumen von 520 ml eingestellt. Dann wurde das Diazotierungsgemisch unter schnellem Rühren zudosiert. Die Mischung wurde weitere 30 min bei 15°C gerührt.

Nach Zugabe von 15 g des Natriumsalzes eines sulfochlorierten C₁₄C₁₇-Paraffins als oberflächenaktives Mittel wurde das Reaktionsgemisch in 1 h auf 80°C erhitzt. Dann wurden 33,5 m l einer 34 gew.-%igen wäßrigen Lösung von Calciumchlorid unter schnellem Rühren in 10 min zugegeben. Nach Erhitzen auf 90°C in 15 min wurde das Gemisch noch 2 h bei dieser Temperatur nachgerührt.

Nach Abkühlen des Reaktionsgemisches auf etwa 60°C durch Zugabe eines Eis/Wasser-Gemisches wurde das Reaktionsprodukt abfiltriert und solange mit Wasser gewaschen, bis das ablaufende Wasser eine Leitfähigkeit von ca. 200 µS aufwies. Anschließend wurde das Produkt bei 80°C unter Vakuum getrocknet.

Es wurden 49,8 g des Pyrazolonazopigmentes Ia in Form des Dihydrats erhalten, was einer Ausbeute von 90,8 %, bezogen auf 2-Amino-4,5-dichlorbenzolsulfonsäure, entspricht.

Analytik (Gew.-% ber./gef.): Na: 4,2/3,8; Ca: 3,6/3,5.

Zur Bestimmung der CIELAB-Farbwerte wurde das erhaltene Pigment Ia in Weich-PVC eingearbeitet. Dazu wurde ein Gemisch von 0,4 g des Pigments Ia, 4,0 g Titandioxid und 80 g einer Mischung aus 65 Teilen Polyvinylchloridpulver, 35 Teilen Diethylhexylphthalat und 2 Teilen Dibutylzinnbisthioglykolsäurehexylester mit Hilfe eines Zweiwalzenmischwerks bei 160°C ca. 5 min homogenisiert. Anschließend wurde das Mischgut zu einem Fell ausgewalzt und gepreßt.

Das so erhaltene glatte Walzfell wurde photometrisch vermessen und nach der CIELAB-Formel (DIN 6174) ausgewertet. Dabei wurden folgende Farbwerte erhalten: Farbwinkel 84°; Chroma 61; Helligkeit 87. Das Pigment Ia hatte gegenüber den in der EP-A-263 074 beschriebenen Pigmenten eine deutlich höhere Farbstärke.

Die Bestimmung der Transparenz des erhaltenen Pigments Ia erfolgte ebenfalls in Weich-PVC. Dazu wurde, wie bei der Bestimmung der CIELAB-Farbwerte beschrieben, ein 1 mm dickes Walzfell hergestellt, das 0,3 g des Pigments Ia und 50 g der Mischung aus Polyvinylchlorid, Diethylhexylphthalat und Dibutylzinnbisthioglykolsäurehexylester enthielt.

Dann wurde die Differenz der Lichtreflexion des eingefärbten Walzfells über schwarzem und weißem Untergrund als Kontrast-Delta-E-Wert (Farbstand nach DIN 6174 gegenüber Idealschwarz) gemessen. Je größer die Differenz und damit auch der Kontrast-Delta-E-Wert ist, umso weniger wird der Untergrund abgedeckt, und umso transparenter ist die Ausfärbung. Für das Pigment Ia wurde ein Kontrast-Delta-E-Wert von 51,9 erhalten. Eine zum Vergleich mit dem Pigment aus Beispiel 2 der EP-A-263 074 hergestellte Weich-PVC-Ausfärbung ergab lediglich einen Kontrast-Delta-E-Wert von 20,6.

Schließlich war das Pigment Ia auch bei der Prüfung der Temperaturstabilität in HDPE bei 30.0°C (DIN 53 772) stabil.

## Patentansprüche

1. Pyrazalanaaopigmente der allgemeinen Formel 1 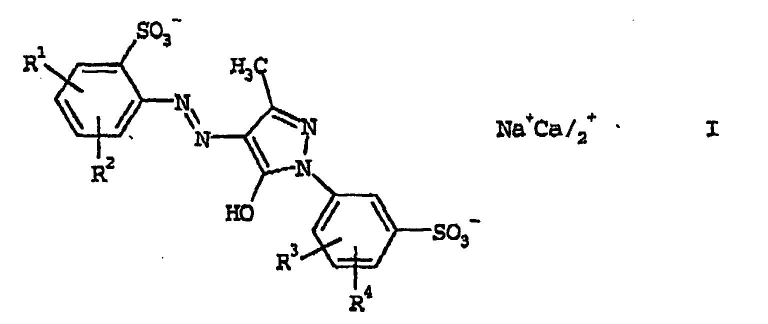 in der die Reste R¹, R², R³ und R⁴ unabhängig voneinander Wasserstoff, Chlor, Methyl oder Ethyl bedeuten, wobei mindestens einer der Reste R¹ bis R⁴ von Wasserstoff verschieden ist,
die durch einen CIELAB-Farbwinkel von 80 bis 85°, ein Chroma von 58 bis 62 und eine Helligkeit ≥ 87 (Meßwinkel 45°, Normlichtart D65) gekennzeichnet sind und in Form dünner nadelförmiger Kristalle mit einer Nadellänge von 0,8 bis 2,5 µm und einer Nadeldicke von 0,1 bis 0,2 µm vorliegen.

2. Pyrazolonazopigmente der Formel I nach Anspruch 1, in der R¹ und R² Chlor und R³ und R⁴ Wasserstoff bedeuten.

3. Verfahren zur Herstellung von Pyrazolonazopigmenten (I) gemäß Anspruch 1 oder 2, **dadurch gekennzeichnet, daß** mam eine 2-Aminobenzolsulfonsäure der allgemeinen Formel II 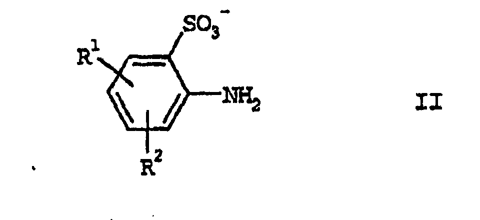 in wäßrigem Medium mit Natriumnitrit diazotiert, die erhaltene Diazokomponente in wäßrigem Medium mit einem 1-(3'-Sulfophenyl)-3-methyl-5-pyrazolon der allgemeinen Formel III 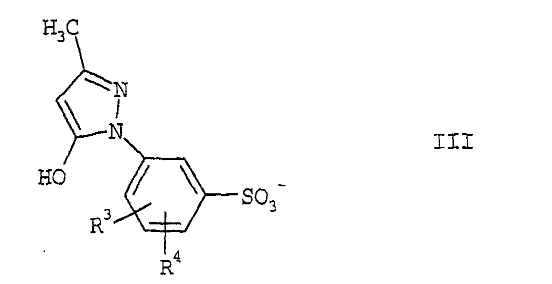 kuppelt und das Kupplungsprodukt anschließend in Gegenwart eines anionischen oberflächenaktiven Mittels mit einer wäßrigen Lösung eines Calciumsalzes zum Natrium/Calcium-Mischsalz umsetzt und dieses dann auf übliche Weise isoliert.

4. Verfahren nach Anspruch 3, **dadurch gekennzeichnet, daß** man als oberflächenaktives Mittel ein Alkansulfonat einsetzt.

5. Verfahren nach Anspruch 3 oder 4, **dadurch gekennzeichnet, daß** man die Umsetzung mit dem Calciumsalz bei 75 bis 85°C durchführt.

6. Verfahren nach den Ansprüchen 3 bis 5, **dadurch gekennzeichnet, daß** man das Natrium/Calcium-Mischsalz vor der Isolierung noch einer thermischen Behandlung bei 90 bis 95°C unterzieht.

7. Verwendung von Pyrazolonazopigmenten der Formel I gemäß Anspruch 1 oder 2 zum Einfärben von hochmolekularen organischen Materialien.

8. Hochmolekulare organische Materialien, eingefärbt mit Pyrazolonazopigmenten der Formel I gemäß Anspruch 1 oder 2.

## Claims

1. Pyrazoloneazo pigments of the general formula I 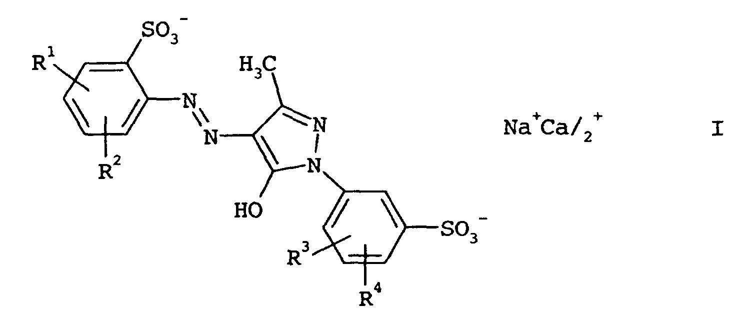 where R¹, R², R³ and R⁴ are independently hydrogen, chlorine, methyl or ethyl subject to the proviso that at least one of R¹ to R⁴ is not hydrogen,
which are **characterized by** a CIELAB hue angle of from 80 to 85°, a chroma of from 58 to 62 and a lightness of ≥ 87 (45° measuring angle, D65 illuminant) and are present in the form of thin acicular crystals having a needle length of from 0.8 to 2.5 µm and a needle thickness of from 0.1 to 0.2 µm.

2. Pyrazoloneazo pigments as claimed in claim 1 of the formula I where R¹ and R² are each chlorine and R³ and R⁴ are each hydrogen.

3. A process for preparing pyrazoloneazo pigments (I) as claimed in claim 1 or 2, which comprises diazotizing a 2-aminobenzenesulfonic acid of the general formula II 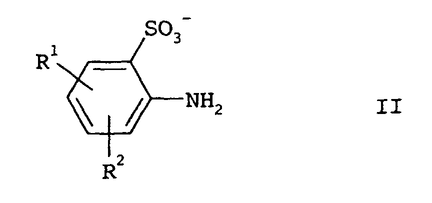 in an aqueous medium with sodium nitrite, coupling the resulting diazo component in an aqueous medium with a 1-(3'-sulfophenyl)-3-methyl-5-pyrazolone of the general formula III 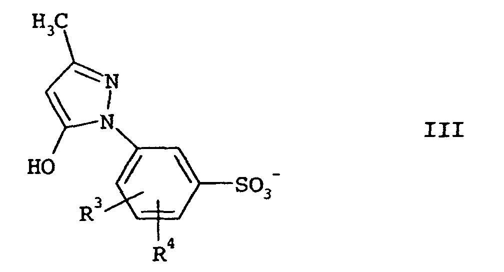 and then reacting the coupling product with an aqueous solution of a calcium salt in the presence of an anionic surfactant to form a mixed sodium-calcium salt and then isolating the latter in a conventional manner.

4. A process as claimed in claim 3, wherein the surfactant used is an alkanesulfonate.

5. A process as claimed in claim 3 or 4, wherein the reaction with the calcium salt is carried out at from 75 to 85°C.

6. A process as claimed in any of claims 3 to 5, wherein the mixed sodium-calcium salt is thermally treated at from 90 to 95°C before being isolated.

7. The use of pyrazoloneazo pigments of the formula I as claimed in claim 1 or 2 for coloring macromolecular organic materials.

8. Macromolecular organic materials colored with pyrazoloneazo pigments of the formula I as claimed in claim 1 or 2.

## Revendications

1. Pigments de pyrazolone répondant à la formule générale I : 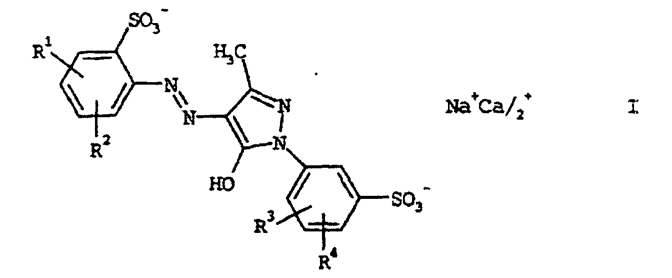 dans laquelle les radicaux R¹, R², R³ et R⁴ représentent indépendamment l'un de l'autre de l'hydrogène, du chlore, du méthyle ou de l'éthyle, au moins un des radicaux R¹ à R⁴ étant différent de l'hydrogène,
qui sont **caractérisés par** un angle chromatique CIELAB de 80 à 85°, un degré de teinte de 58 à 62 et une luminosité ≥ 87 (angle de mesure : 45°, illuminant normalisé D65) et qui se présentent sous la forme de minces cristaux en forme d'aiguilles ayant une longueur d'aiguille de 0,8 à 2,5 µm et une épaisseur d'aiguille de 0,1 à 0,2 µm.

2. Pigments de pyrazolone répondant à la formule I suivant la revendication 1, dans laquelle R¹ et R² représentent du chlore et R³ et R⁴ de l'hydrogène.

3. Procédé de préparation de pigments de pyrazolone (I) suivant l'une des revendications 1 et 2, **caractérisé en ce qu'**on diazote en milieu aqueux un acide 2-aminobenzènesulfonique de la formule générale II : 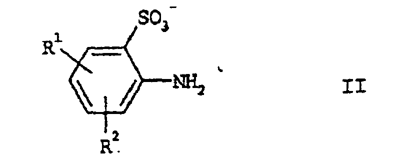 avec du nitrite de sodium, on couple en milieu aqueux le composant diazoïque obtenu avec une 1-(3'-sulfophényl)-3-méthyl-5-pyrazolone de la formule générale III : 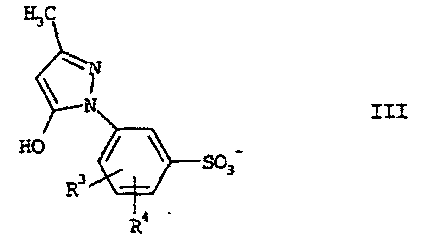 et ensuite, en présence d'un agent tensioactif anionique, on fait réagir le produit de couplage avec une solution aqueuse d'un sel de calcium pour former un sel mixte de sodium/calcium et on isole ensuite celui-ci d'une manière courante.

4. Procédé suivant la revendication 3, **caractérisé en ce que**, comme agent tensioactif, on met en oeuvre un alcanesulfonate.

5. Procédé suivant l'une des revendications 3 et 4, **caractérisé en ce qu'**on effectue la réaction avec le sel de calcium à 75 jusqu'à 85°C.

6. Procédé suivant l'une des revendications 3 à 5, **caractérisé en ce que**, avant l'isolement, on soumet encore le sel mixte de sodium/calcium à un traitement thermique à 90 jusqu'à 95°C.

7. Utilisation de pigments de pyrazolone de la formule I suivant l'une des revendications 1 et 2, pour teindre des matières organiques de haut poids moléculaire.

8. Matières organiques de haut poids moléculaire, teintes avec des pigments de pyrazolone de la formule I suivant l'une des revendications 1 et 2.
